# EUROPEAN PATENT SPECIFICATION

(11) **EP 0 841 006 B1**
(45) Date of publication and mention of the grant of the patent: **10.04.2002**
(21) Application number: 97203324.5
(22) Date of filing: 27.10.1997
(51) Int. Cl.: A01M 7/00

(54) **Apparatus and method for applying liquid such as pesticides to the land**
Vorrichtung und Verfahren zum Auftragen von Flüssigkeit, sowie Pestiziden auf dem Boden
Appareil et méthode pour appliquer du liquide tel que des pesticides sur la terre

(30) Priority: 11.11.1996 NL 1004495
(43) Date of publication of application: 13.05.1998
(73) Proprietor: Greenland Nieuw-Vennep B.V., 2153 LR Nieuw-Vennep (NL)
(72) Inventor: Beijaard, Martinus Johannes Antonius, 1566 NE Assendelft (NL)
(74) Representative: Land, Addick Adrianus Gosling

(56) References cited:
- EP-A- 0 326 045
- BE-A- 665 706

## Description

In the arable farming sector pesticide is usually applied to land using a tractor with foldable booms on either side on which spray nozzles are arranged. Through being blown about the pesticide does not always settle at the desired location, particularly when a wind-force is present above the land. It is undesirable for pesticide to reach surface water, for instance via a ditch. For better directing of the pesticide applied by the spray nozzles it has already been proposed - see for instance the European patent EP-A-0326045 - to arrange along the booms air bags in which openings are situated on the underside close to the spray nozzles for creating an "air curtain", whereby the liquid is blown about less. These air bags have a considerable size and, in order to obtain sufficient overpressure therein, a relatively large fan is required, which must be energized for instance by,means of a hydraulic motor from a tractive vehicle. Such an installation requires a considerable investment, which is not made by many arable farmers, whereby the above stated environmental problems remain unsolved. It requires much discipline of arable farmers who have not purchased such an installation to only spray pesticide on the land in sufficiently windless weather in order to prevent the liquid being blown about or drifting. It is now also proposed to make compulsory that the crop not be placed too closely along the side of a ditch.

The Belgian patent specification 665 706 further describes an apparatus in which pesticide is applied to land in a directed manner. However, a casing of sheet steel provided with a skirt is herein arranged on a frame part, which is impractical in terms of both traction over the land and folding of the frame.

The present invention provides an apparatus for applying a liquid such as pesticide to land, comprising:
- a vehicle for movement over the land;
- at least one frame part protruding laterally relative to the vehicle;
- a plurality of spray nozzles arranged along the frame part for spraying the liquid onto the land; and
- spray directing means arranged only in the vicinity of an outer end of the frame part for directing the liquid from the spray nozzle.

Using means which are relatively simple to arrange the apparatus according to the present invention prevents pesticide reaching surface water. In a preferred embodiment, wherein the spray directing means comprise an elongate air bag close to an outer end of the frame, only a fan of relatively low power is required, whereby this fan can for instance be connected to an existing (electrical) power source of the vehicle.

In a further preferred embodiment the air bag is situated outward relative to one of the outer hinges of the foldable boom, whereby damage to said air bag is prevented.

According to a further preferred embodiment of the present invention, air-supported spray nozzles or so-called air/liquid dispensers, or mixed forms thereof, are arranged only in the vicinity of an outer end of the frame. Air-supported spray nozzles or air/liquid dispensers along the whole length also require a considerable investment which, however, can be reduced by the present invention.

Further advantages, features and details of the present invention will be elucidated in the light of the following description with reference to the annexed drawings, in which:
figure 1 shows a view in perspective of a first preferred embodiment of the apparatus according to the present invention; and
figure 2 shows detail II of figure 1.

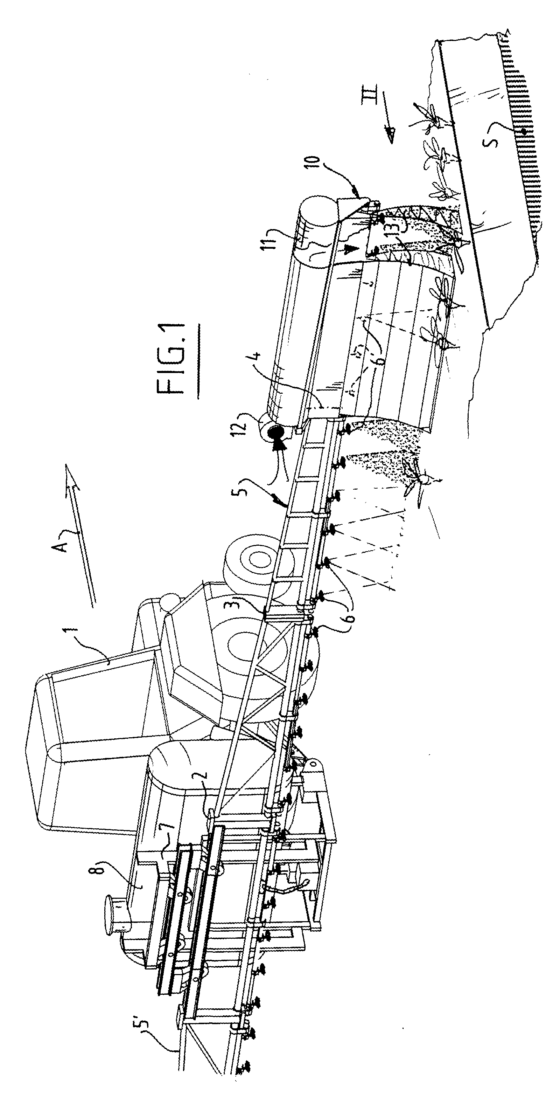

On a tractor 1 (figure 1) which can move in the direction of the arrow A is arranged a boom 5 which is foldable via hinges 2, 3 and 4 and on the underside of which spray nozzles 6 are arranged for spraying pesticides on the land. Boom 5 (and 5') is mounted on a frame 7 on the rear of the tractor, while a supply tank 8 for the liquid is likewise arranged there.

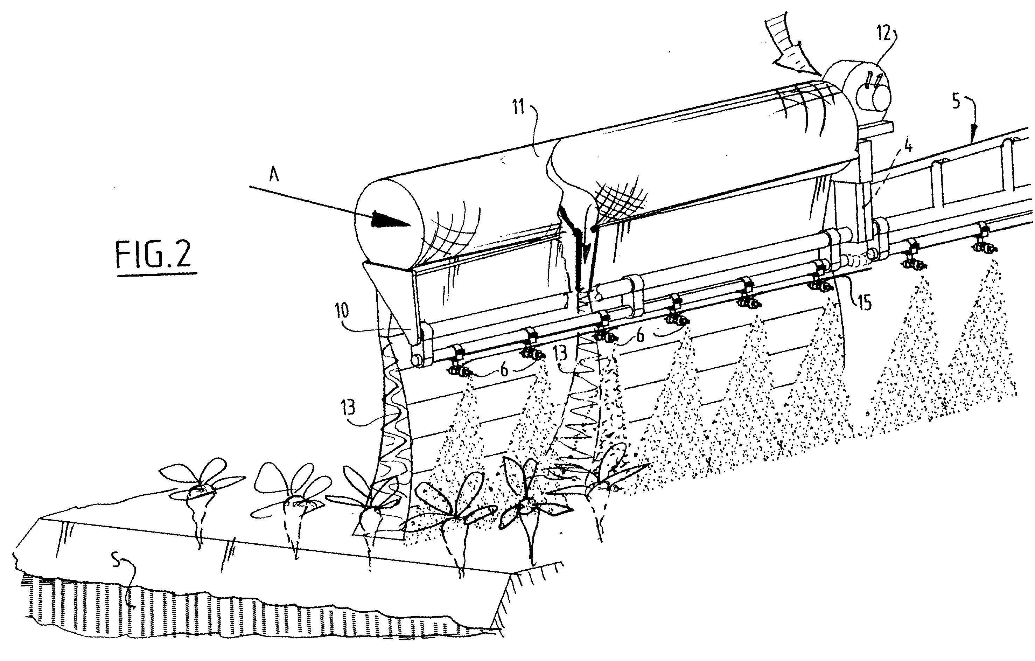

In the preferred embodiment shown in figures 1 and 2, only on the final segment 10 of frame part 5 is an air bag 11 arranged in which overpressure is created using a fan 12, whereby, as is shown schematically, an air curtain 13 is created to the front of spray nozzles 6, so that the pesticide is prevented from blowing about, particularly at the outer end of frame part 5 which during operations will be situated close to a ditch near an edge of a field. Due to the short length of air bag 11 the fan need only produce for instance a power of for instance 5 kWatt, whereby it is possible to connect it to the electrical system of the tractor and an additional power source can be dispensed with.

In the shown preferred embodiment the spray nozzles 6 in segment 10 are likewise connected to an air line 15, whereby directing of spray nozzles 6 can be improved further and undesired dissemination of the liquid via the ditch into surface water is avoided.

When the frame 5 (and 5') is folded up by means of hinges 2, 3 and 4, the air bag is not folded double, thus avoiding damage thereto, whereby the useful life thereof is extended.

The present invention is not limited to the above described preferred embodiment thereof; the rights applied for are defined by the following claims, within the scope of which many modifications can be envisaged.

## Claims

1. Apparatus for applying a liquid such as pesticide to land, comprising:
- a vehicle for movement over the land;
- at least one frame part protruding laterally relative to the vehicle;
- a plurality of spray nozzles arranged along the frame part for spraying the liquid onto the land; and
- spray directing means arranged only in the vicinity of an outer end of the frame part for directing the liquid from the spray nozzle.

2. Apparatus as claimed in claim 1, wherein the spray directing means comprise an elongate air bag in the underside of which openings are arranged, in addition to a fan arranged on the frame part at a lateral distance from the vehicle for creating at least some overpressure in the elongate air bag.

3. Apparatus as claimed in claim 1 or 2, wherein the frame part comprises one or more hinges and the spray directing means are only arranged outwardly of one of the outer hinges.

4. Apparatus as claimed in claim 1, 2 or 3, wherein the spray directing means comprise a plurality of air-supported spray nozzles which are arranged close to the outer end and to which an air line is connected.

5. Apparatus as claimed in any of the claims 1-4, wherein two respective frame parts extend on either side of the vehicle and wherein spray directing means are arranged close to each respective outer end of a frame part.

6. Apparatus as claimed in any of the claims 1-3 or 5, wherein the spray directing means comprise a plurality of air/liquid dispensers.

7. Method for applying a liquid such as pesticide to land, wherein an apparatus as claimed in any of the foregoing claims is used.

8. Assembly for use in a apparatus as claimed in any of the claims 1-4 and/or a method as claimed in claims 7, comprising:
- at least one frame part to be mounted in such a way that it protrudes laterally relative to a vehicle for movement over the land;
- a plurality of spray nozzles to be arranged along the frame part for spraying the liquid onto the land; and
- spray directing means to be arranged only in the vicinity of an outer end of the frame part for directing the liquid from the spray nozzle onto the land.

## Patentansprüche

1. Vorrichtung zum Aufbringen einer Flüssigkeit, wie beispielsweise Pestizid, auf dem Boden, mit:
- einem Fahrzeug zum Fahren über den Boden;
- wenigstens einem Rahmenteil, das am Fahrzeug seitlich vorsteht;
- einer Anzahl Sprühdüsen, die entlang des Rahmenteils angeordnet sind, um die Flüssigkeit auf den Boden zu sprühen; und
- Sprührichtmitteln, die nur in der Nähe des außenliegenden Endes des Rahmenteils angeordnet sind, um die Flüssigkeit aus den Sprühdüsen zu richten.

2. Vorrichtung nach Anspruch 1,
wobei die Sprührichtmittel einen langgestreckten Luftsack aufweisen, an dessen Unterseite Öffnungen, zusätzlich zu einem Gebläse am Rahmenteil in einem seitlichen Abstand zum Fahrzeug angeordnet sind, um wenigstens einen gewissen Überdruck in dem langgestreckten Luftsack zu erzeugen.

3. Vorrichtung nach Anspruch 1 oder 2,
wobei der Rahmenteil ein oder mehrere Gelenke aufweist, und die Sprührichtmittel nur außerhalb von einem der außenliegenden Gelenke angeordnet sind.

4. Vorrichtung nach Anspruch 1, 2 oder 3,
wobei die Sprührichtmittel eine Anzahl von luftgestützten Sprühdüsen aufweisen, die nahe dem außenliegenden Ende angeordnet sind, und an die eine Luftleitung angeschlossen ist.

5. Vorrichtung nach einem der Ansprüche 1 bis 4,
wobei an jeder Seite des Fahrzeuges zwei entsprechende Rahmenteile vorstehen, und wobei die Sprührichtmittel jeweils in der Nähe jedes außenliegenden Endes eines Rahmenteils angeordnet sind.

6. Vorrichtung nach einem der Ansprüche 1 bis 3 oder 5,
wobei die Sprührichtmittel eine Anzahl von Luft/Flüssigkeits-Ausgabeelementen haben.

7. Verfahren zum Auftragen einer Flüssigkeit, wie beispielsweise Pestizid, auf den Boden, wobei eine Vorrichtung wie nach einem der vorstehenden Ansprüche beansprucht, verwendet wird.

8. Baugruppe zur Verwendung in einer Vorrichtung wie nach einem der Ansprüche 1 bis 4 und/oder bei einem Verfahren wie im Anspruch 7 beansprucht, verwendet, mit:
- wenigstens einem Rahmenteil, das so an einem Fahrzeug zum Fahren über den Boden befestigt wird, daß es an diesem an der Seite vorsteht;
- einer Anzahl von Sprühdüsen, die entlang dem Rahmenteil angeordnet sind, zum Sprühen der Flüssigkeit auf den Boden; und
- Sprührichtmitteln, die nur in der Nähe eines außenliegenden Endes des Rahmenteils angeordnet sind, um die Flüssigkeit aus den Sprühdüsen auf den Boden zu richten.

## Revendications

1. Appareil pour appliquer un liquide, tel qu'un pesticide, sur le sol, comprenant :
- un véhicule pour déplacement sur le sol ;
- au moins une rampe faisant saillie latéralement par rapport au véhicule ;
- une pluralité de buses de pulvérisation disposées le long de la rampe pour pulvériser le liquide sur le sol ; et
- des moyens de direction de pulvérisation disposés seulement au voisinage d'une extrémité extérieure de la rampe pour diriger le liquide à partir des buses de pulvérisation.

2. Appareil selon la revendication 1, dans lequel le moyen de direction de pulvérisation comprend un coussin d'air allongé du côté intérieur duquel des ouvertures sont disposées, ainsi qu'un ventilateur disposé sur la rampe à une distance latérale du véhicule pour créer au moins une certaine surpression dans la poche d'air allongée.

3. Appareil selon la revendication 1 ou 2, dans lequel la rampe comprend une ou plusieurs charnières et les moyens de direction de pulvérisation ne sont disposées qu'extérieurement par rapport à l'une des charnières extérieures.

4. Appareil selon la revendication 1, 2 ou 3, dans lequel les moyens de direction de pulvérisation comprennent une pluralité de buses de pulvérisation pneumatiques qui sont disposées près de l'extrémité extérieure et auxquelles une conduite d'air est connectée.

5. Appareil selon l'une quelconque des revendications 1 à 4, dans lequel deux rampes respectives s'étendent le long de chacun des côtés du véhicule et dans lequel lesdits moyens de direction de pulvérisation sont disposés près de chaque extrémité extérieure respective des rampes.

6. Appareil selon l'une quelconque des revendications 1 à 3 ou 5, dans lequel les moyens de direction de pulvérisation comprennent une pluralité de distributeurs air/liquide.

7. Procédé pour appliquer un liquide tel qu'un pesticide sur le sol, dans lequel un appareil selon l'une quelconque des revendications précédentes est utilisé.

8. Assemblage pour utilisation dans un appareil selon l'une quelconque des revendications 1 à 4, et/ou un procédé selon la revendication 7, comprenant :
- au moins une rampe qui doit être montée d'une manière telle qu'elle dépasse latéralement par rapport à un véhicule pour déplacement au-dessus du sol ;
- une pluralité de buses de pulvérisation qui doivent être disposées le long de la rampe pour pulvériser le liquide sur le sol ; et
- des moyens de direction de pulvérisation qui doivent être disposés seulement au voisinage d'une extrémité extérieure de la rampe pour diriger le liquide depuis la buse de pulvérisation sur le sol.
